# EUROPÄISCHE PATENTANMELDUNG

(11) **EP 3 627 671 A1**
(43) Veröffentlichungstag der Anmeldung: **25.03.2020**
(21) Anmeldenummer: 18195858.8
(22) Anmeldetag: 21.09.2018
(51) Int. Cl.: H02K 15/00

(54) **VERFAHREN ZUR HERSTELLUNG EINER WICKELKOPFANORDNUNG FÜR EINE ELEKTRISCHE ROTIERENDE MASCHINE**

(71) Anmelder: Siemens Aktiengesellschaft, 80333 München (DE)
(72) Erfinder: Brach, Karsten, 13589 Berlin (DE); Jensen, Jens Dahl, 14050 Berlin (DE); Kümmlee, Horst, 13505 Berlin (DE); Rauch, Hartmut, 12203 Berlin (DE); Rehme, Olaf, 20148 Hamburg (DE); Schneck, Jakob, 10245 Berlin (DE); Seibicke, Frank, 14822 Borkheide (DE); Stier, Oliver, 12163 Berlin (DE); Zegenhagen, Mark Tobias, 10115 Berlin (DE)

(57) **Zusammenfassung**

Die Erfindung betrifft ein Verfahren zur Herstellung einer Wickelkopfanordnung (24) für eine elektrische rotierende Maschine (2). Um eine Wickelkopfanordnung (24) anzugeben, die, im Vergleich zum Stand der Technik, einfacher und kostengünstiger herzustellen ist, wird vorgeschlagen, dass die Wickelkopfanordnung (24) mindestens einen isolierenden Grundkörper (26, 28) aufweist, welcher zumindest teilweise aus einem dielektrischen Werkstoff hergestellt ist, wobei eine Mehrzahl von Leitern (30) aus einem metallischen Werkstoff über zumindest je eine Zwischenschicht (36) mit dem isolierenden Grundkörper (26, 28) verbunden werden, wobei die Zwischenschicht (36) aus einem Werkstoff, welcher sich vom dielektrischen Werkstoff und vom metallischen Werkstoff unterscheidet, hergestellt wird, wobei die Leiter (30) mittels eines ersten thermischen Spritzverfahrens auf die Zwischenschicht (36) aufgesprüht werden.

## Beschreibung

Die Erfindung betrifft ein Verfahren zur Herstellung einer Wickelkopfanordnung für eine elektrische rotierende Maschine.

Die Erfindung betrifft ferner eine Wickelkopfanordnung für eine elektrische rotierende Maschine, welche nach einem derartigen Verfahren hergestellt ist.

Darüber hinaus betrifft die Erfindung einen Stator für eine elektrische rotierende Maschine, welcher ein magnetfeldführendes Statorelement und mindestens eine derartige Wickelkopfanordnung aufweist.

Die Erfindung betrifft überdies eine elektrische rotierende Maschine mit mindestens einem derartigen Stator.

Üblicherweise werden die Statorwicklungen einer derartigen elektrischen rotierenden Maschine, welche mit einer Leistung von mindestens einem Megawatt betreibbar ist, als Formspulen, ausgeführt. Formspulen werden beispielsweise mittels Ziehen, Gießen oder Pulvermetallurgie hergestellt. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es erforderlich, die Wickelköpfe zu kühlen. Zur Kühlung wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwändige Versteifungsmaßnahmen aufgrund der großen Leiterlängen erforderlich, um unzulässige Schwingungen und Verformungen im Betrieb zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Wickelköpfe der Formspulen werden mit hohem Aufwand halbautomatisch gefertigt, beispielsweise indem Kupferleiter so gebogen werden, dass sie passend in die Nuten platzierbar sind. Eine anschließende Verbindung der jeweiligen Kupferleiter, eine Isolierung der Verbindungsstellen und eine Versteifung der Kupferleiter gegeneinander erfolgt manuell unter hohem Aufwand. Prinzip bedingt ist es nur unter hohem Aufwand, beispielsweise unter Verwendung unterschiedlicher Leiterlängen, welche durch Löten verbunden werden, möglich, unterschiedliche Leitergeometrien in den Nuten und in den Wickelköpfen zu realisieren.

Bei Zahnspulenwicklungen insbesondere in Flachdrahtausführung kann der Abstand benachbarter Nuten nur so klein sein, wie es der einzuhaltende Biegeradius des isolierten Kupferleiters erlaubt.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift EP 3 297 131 A1 beschreibt einen Stator für eine elektrische rotierende Maschine, welcher ein Statorblechpaket mit Spulenstäben und mindestens eine Statorwickelkopfplatine mit einem isolierenden Grundkörper aufweist. Um die axiale Länge des Stators zu verringern, wird vorgeschlagen, dass in den isolierenden Grundkörper Leiterbahnen integriert sind, wobei die mindestens eine Statorwickelkopfplatine auf einer Stirnseite des Statorblechpakets aufliegt und wobei die Leiterbahnen mit den Spulenstäben stoffschlüssig verbunden sind.

Der Erfindung liegt die Aufgabe zugrunde, ein Verfahren zur Herstellung einer Wickelkopfanordnung für eine elektrische rotierende Maschine anzugeben, welches, im Vergleich zum Stand der Technik, einfacher und kostengünstiger ist.

Die Aufgabe wird erfindungsgemäß durch ein Verfahren zur Herstellung einer Wickelkopfanordnung für eine elektrische rotierende Maschine mit mindestens einem isolierenden Grundkörper, welcher zumindest teilweise aus einem dielektrischen Werkstoff hergestellt ist, gelöst, wobei eine Mehrzahl von Leitern aus einem metallischen Werkstoff über zumindest je eine Zwischenschicht mit dem isolierenden Grundkörper verbunden werden, wobei die Zwischenschicht aus einem Werkstoff, welcher sich vom dielektrischen Werkstoff und vom metallischen Werkstoff unterscheidet, hergestellt wird, wobei die Leiter mittels eines ersten thermischen Spritzverfahrens, insbesondere mittels Kaltgasspritzen, auf die Zwischenschicht aufgesprüht werden.

Ferner wird die Aufgabe erfindungsgemäß durch eine Wickelkopfanordnung für eine elektrische rotierende Maschine gelöst, welche nach einem derartigen Verfahren hergestellt ist.

Darüber hinaus wird die Aufgabe erfindungsgemäß durch einen Stator für eine elektrische rotierende Maschine gelöst, welcher ein magnetfeldführendes Statorelement und mindestens eine derartige Wickelkopfanordnung aufweist.

Zudem wird die Aufgabe erfindungsgemäß durch eine elektrische rotierende Maschine mit mindestens einem derartigen Stator gelöst.

Die in Bezug auf das Verfahren nachstehend angeführten Vorteile und bevorzugten Ausgestaltungen lassen sich sinngemäß auf die Wickelkopfanordnung, den Stator und die elektrische rotierende Maschine übertragen.

Der Erfindung liegt die Überlegung zugrunde, die Herstellung einer Wickelkopfanordnung durch die Verwendung eines thermischen Spritzverfahrens zu optimieren, indem Leiter der Wickelkopfanordnung durch Aufspritzen von metallischen Festkörperpartikeln, sogenannten Spritzpartikeln, auf einen isolierenden Grundkörper über eine Zwischenschicht hergestellt werden. Durch das Aufsprühen der Spritzpartikel wird eine dichte und fest haftende Schicht gebildet. Thermische Spritzverfahren sind beispielsweise Lichtbogenspritzen, Plasmaspritzen, Flammspritzen oder Kaltgasspritzen. Die Spritzpartikel enthalten beispielsweise Kupfer, während der isolierende Grundkörper aus einem dielektrischen Werkstoff, beispielsweise aus einem Kunststoff oder einem keramischen Werkstoff, hergestellt ist. Alternativ weist der isolierende Grundkörper eine, beispielsweise elektrisch leitfähige, Grundplatte auf, welche, zumindest im Bereich der Leiter, mit einer isolierenden Schicht aus einem dielektrischen Werkstoff, beispielsweise aus einem Kunststoff oder einem keramischen Werkstoff, beschichtet ist.

Um dennoch eine Beschädigung des isolierenden Grundkörpers zu vermeiden, wird darauf eine Zwischenschicht aus einem Werkstoff, welcher sich vom dielektrischen Werkstoff und vom metallischen Werkstoff unterscheidet, angeordnet, auf welche die Spritzpartikel aufgesprüht werden. Die Zwischenschicht ist mit dem dielektrischen Werkstoff des isolierenden Grundkörpers verbunden und wird beispielsweise aus Silber (Ag), Aluminium, Antimon, Magnesium, Zinn, Zink, Blei, Tantal oder aus einer Mischung und/oder aus mindestens einer Legierung davon hergestellt. Mit Hilfe eines thermischen Spritzverfahrens sind, im Vergleich zu anderen additiven Fertigungsverfahren, dicke Schichten, beispielsweise im Millimeterbereich und im Zentimeterbereich, in kurzer Zeit und geometrisch sehr flexibel herstellbar. Durch ein thermisches Spritzverfahren wird der Fertigungsprozess somit einfacher und kostengünstiger.

In einer bevorzugten Ausführungsform werden die Leiter mittels Kaltgasspritzen auf die Zwischenschicht aufgesprüht. Beim Kaltgasspritzen handelt es sich um ein thermisches Spritzverfahren, wobei die Spritzpartikel auf eine so hohe Geschwindigkeit beschleunigt werden, dass sie im Gegensatz zu anderen thermischen Spritzverfahren auch ohne vorangehendes An- oder Aufschmelzen beim Aufprall auf das Substrat eine dichte und fest haftende Schicht bilden. Da das mittels Kaltgasspritzen aufgetragene Material nicht geschmolzen, sondern durch seine kinetische Energie verformt wird, sind die Zwischenschicht und der dielektrische Grundkörper, im Vergleich zu anderen thermischen Spritzverfahren, nur sehr geringen Temperaturbelastungen ausgesetzt.

Bei einer bevorzugten Ausgestaltung wird die Zwischenschicht zumindest über eine formschlüssige Verbindung mit dem isolierenden Grundkörper verbunden. Durch eine, insbesondere zusätzliche, formschlüssige Verbindung wird die Wickelkopfanordnung vor beispielsweise thermischen und/oder mechanischen, äußeren Einflüssen geschützt.

Bei einer weiteren vorteilhaften Ausgestaltung wird die Zwischenschicht mittels eines zweiten thermischen Spritzverfahrens, insbesondere mittels Kaltgasspritzen, auf den isolierenden Grundkörper aufgesprüht, wobei sich das zweite thermische Spritzverfahren vom ersten thermischen Spritzverfahren unterscheidet. Während der metallische Werkstoff der Leiter eine möglichst hohe elektrische Leitfähigkeit aufweist, ist der Werkstoff der Zwischenschicht dafür geeignet, eine mechanisch und thermisch stabile Verbindung zwischen dem dielektrischen Grundkörper und den jeweiligen Leitern auszubilden. Insbesondere ist das zweite thermische Spritzverfahren daraufhin optimiert, die Zwischenschicht schonend auf den dielektrischen Grundkörper aufzubringen. Darüber hinaus wird die Zwischenschicht mit einem thermischen Spritzverfahren aufgesprüht, um ein durchgängiges und einheitlichen Fertigungsverfahren zu realisieren.

In einer weiteren vorteilhaften Ausführungsform unterscheidet sich das zweite thermische Spritzverfahren hinsichtlich einer Geschwindigkeit und/oder einer Größe der Partikel vom ersten thermischen Spritzverfahren. Beispielsweise bei der Verwendung eines weichen Werkstoffs wie Zinn ist eine geringere kinetische Energie erforderlich, damit die Festkörperpartikel beim Auftreffen eine dichte, fest haftende Schicht bilden. Dadurch werden Beschädigungen des dielektrischen Grundkörpers vermieden.

Besonders vorteilhaft wird die Zwischenschicht zumindest teilweise in Nuten des isolierenden Grundkörpers angeordnet. Durch eine Anordnung in Nuten ist die Zwischenschicht robust gegenüber äußeren Einflüssen.

In einer weiteren vorteilhaften Ausgestaltung weisen die Nuten des isolierenden Grundkörpers eine Profilierung auf, über welche die formschlüssige Verbindung hergestellt wird. Beispielsweise ist die Profilierung schwalbenschwanzförmig oder hammerkopfförmig ausgestaltet. Durch die Profilierung wird die formschlüssige Verbindung stabilisiert.

In einer vorteilhaften Ausführungsform wird in einem weiteren Schritt eine elektrische Isolation aufgebracht. Durch eine elektrische Isolation werden beispielsweise Kurzschlüsse zwischen den Leitern verhindert.

Besonders vorteilhaft werden Kühlkanäle im isolierenden Grundkörper angeordnet. Durch die Kühlkanäle strömt zur Kühlung während des Betriebes ein Kühlfluid, welches die in den Leitern entstehende Wärme abführt. Insbesondere bei der Verwendung eines isolierender Grundkörper mit geringer Wärmeleitfähigkeit ist es erforderlich, die Leiter über Kühlkanäle zu kühlen.

Bei einer weiteren vorteilhaften Ausgestaltung werden die Leiter in zumindest zwei, insbesondere in Axialrichtung hintereinander angeordneten, Ebenen angeordnet. Durch eine Anordnung in Ebenen wird der benötigte Bauraum der Wickelkopfanordnung reduziert.

Besonders vorteilhaft werden die Leiter der zumindest zwei Ebenen über Verbindungselemente miteinander verbunden. Ein Verbindungselement ist beispielsweise ein Leiterelement, welches mit einem Leiter der ersten Ebene und einem Leiter der zweiten Ebene unlösbar verbunden ist. Durch ein derartiges Verbindungselement ist die Wickelkopfanordnung auch bei sehr hoher mechanischer und/oder thermischer Beanspruchung stabil.

Bei einer weiteren vorteilhaften Ausgestaltung wird ein dielektrischer Werkstoff mit einer Durchschlagsfestigkeit von mindestens 10 kV/mm verwendet. Derartige dielektrische Werkstoffe sind beispielsweise thermoplastische Kunststoffe wie Plexiglas und PVC, glasfaserverstärkte Epoxidharze, welche optional Glimmer enthalten, oder keramische Werkstoffe wie Aluminiumoxid. Durch einen Werkstoff mit einer derartig hohen Durchschlagfestigkeit ist es möglich, den Abstand zwischen den Leitern zu verkleinern und den Platzbedarf der Wickelkopfanordnung zu reduzieren.

Besonders vorteilhaft wird ein metallischer Werkstoff verwendet, welcher eine höhere elektrische Leitfähigkeit und/oder eine höhere Festigkeit als der Werkstoff der Zwischenschicht aufweist. Beispielsweise wird als metallischer Werkstoff Kupfer oder eine Kupferlegierung verwendet während die Zwischenschicht beispielsweise Zinn enthält. Durch derartige Werkstoffe wird eine einfache und kostengünstige Herstellung einer Wickelkopfanordnung mit einer hohen Stromtragfähigkeit und hohen mechanischen Stabilität ermöglicht.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: eine dreidimensionale Darstellung einer Wickelkopfanordnung für eine elektrische rotierende Maschine,
- FIG 3: einen vergrößerten Querschnitt einer ersten Ausführungsform einer Wickelkopfanordnung,
- FIG 4: einen Querschnitt von Leitern einer Wickelkopfanordnung,
- FIG 5: eine schematische Darstellung eines Verfahrens zur Herstellung einer Wickelkopfanordnung,
- FIG 6: einen vergrößerten Querschnitt einer zweiten Ausführungsform einer Wickelkopfanordnung,
- FIG 7: einen vergrößerten Querschnitt einer dritten Ausführungsform einer Wickelkopfanordnung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

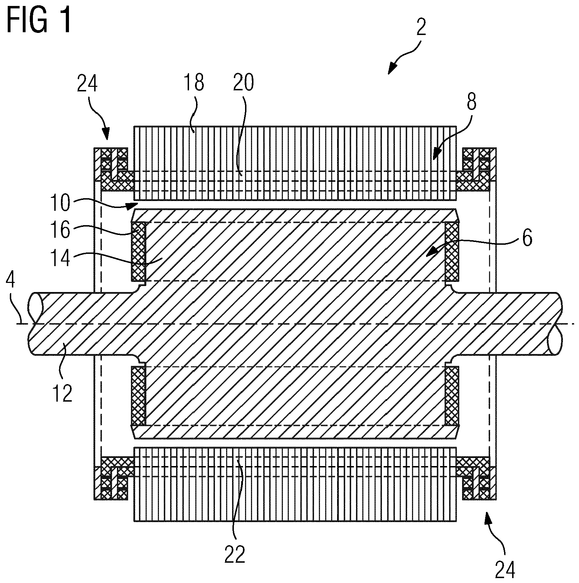

FIG 1 zeigt einen Längsschnitt einer elektrischen rotierenden Maschine 2, welche beispielhaft als Synchronmaschine ausgeführt ist. Die Synchronmaschine weist einen um eine Rotationsachse 4 rotierbaren Rotor 6, der exemplarisch als Schenkelpolläufer ausgeführt ist, und einen den Rotor 6 umgebenden Stator 8 auf. Zwischen dem Rotor 6 und dem Stator 8 befindet sich ein Spalt 10, der insbesondere als Luftspalt ausgeführt ist. Die Rotationsachse 4 definiert eine Axialrichtung, eine Radialrichtung und eine Umfangsrichtung. Der Rotor 6 umfasst eine Welle 12 und Schenkelpole 14 mit einer Erregerwicklung 16. Alternativ weist der Rotor 6 Permanentmagnete oder einen Kurzschlusskäfig auf.

Der Stator 8 umfasst ein magnetfeldführendes, insbesondere wirbelstromunterdrückendes, Statorelement 18, welches beispielsweise als Blechpaket ausgeführt ist, und eine Statorwicklung 20. Die Statorwicklung 20 umfasst Spulenstäbe 22, welche beispielsweise aus Kupfer hergestellt sind und in Axialrichtung durch das magnetfeldführende Statorelement 18 verlaufen. Die axialen Enden der Spulenstäbe 22 sind jeweils mit einer Wickelkopfanordnung 24 verbunden. Anschlüsse der Statorwicklung 20, beispielsweise an einen Klemmenkasten, sind aus Gründen der Übersichtlichkeit nicht dargestellt.

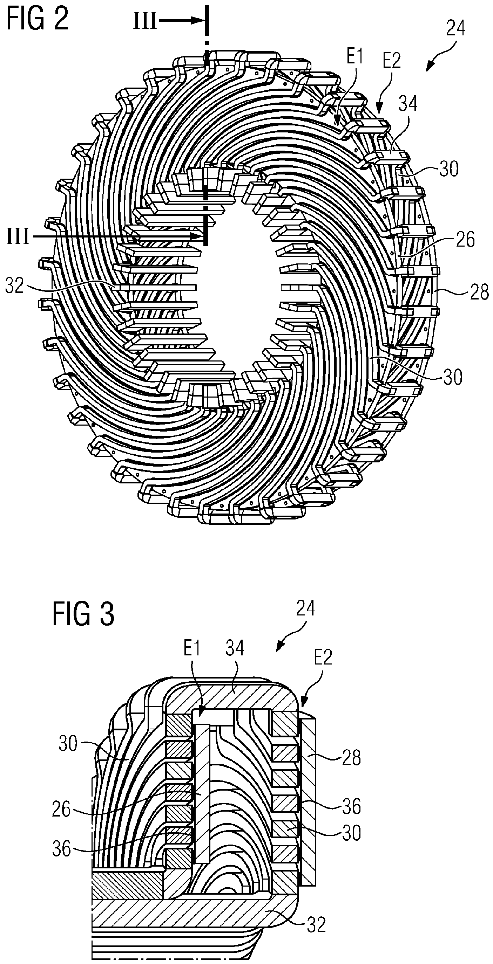

FIG 2 zeigt eine dreidimensionale Darstellung einer Wickelkopfanordnung 24 für eine elektrische rotierende Maschine 2. Die Wickelkopfanordnung 24 umfasst beispielhaft zwei in Axialrichtung hintereinander angeordnete Ebenen E1, E2 mit jeweils einem isolierenden Grundkörper 26, 28. Die Wickelkopfanordnung 24 ist für eine Zweischichtwicklung vorgesehen. Der isolierende Grundkörper 26, 28 weist im Wesentlichen eine hohlzylindrische Form auf und ist aus einem dielektrischen Werkstoff, beispielsweise aus einem Kunststoff oder einem keramischen Werkstoff, mit einer Durchschlagsfestigkeit von mindestens 10 kV/mm hergestellt. Jeder Ebene ist eine Mehrzahl von Leitern 30 zugeordnet, wobei die Leiter 30 mit dem jeweiligen isolierenden Grundkörper 26, 28 verbunden sind. Die Leiter 30 weisen beispielhaft einen rechteckigen oder quadratischen Leiterquerschnitt auf und sind aus einem metallischen Werkstoff, insbesondere Kupfer, mit einer Leitfähigkeit von mindestens 50 MS/m hergestellt. An den Leitern 30 sind metallische Verbindungsabschnitte 32 angeordnet, um eine Verbindung der Leiter 30 zu den jeweiligen Spulenstäben 22 herzustellen. Darüber hinaus sind die Leiter 30 der jeweiligen Ebenen E1, E2 über elektrisch leitfähige Verbindungselemente 34 verbunden. Beispielsweise sind die Verbindungselemente 34 aus Kupfer hergestellt. Die weitere Ausgestaltung der Wickelkopfanordnung 24 in FIG 2 entspricht der in FIG 1.

FIG 3 zeigt einen vergrößerten Querschnitt einer ersten Ausführungsform einer Wickelkopfanordnung 24. Die Leiter 30 sind über zumindest je eine Zwischenschicht 36 mit dem jeweiligen isolierenden Grundkörper 26, 28 verbunden, wobei die Zwischenschicht 36 ein Leiterfundament bildet und über eine formschlüssige Verbindung mit dem jeweiligen isolierenden Grundkörper 26, 28 verbunden ist. Die Zwischenschicht 36 ist aus einem Werkstoff hergestellt, welcher sich vom dielektrischen Werkstoff des jeweiligen isolierenden Grundkörpers 26, 28 und vom metallischen Werkstoff der Leiter 30 unterscheidet. Die Zwischenschicht 36 ist beispielsweise aus Silber, Aluminium, Antimon, Magnesium, Zinn, Zink, Blei, Tantal oder aus einer Mischung und/oder aus mindestens einer Legierung davon hergestellt. Optional weist die Zwischenschicht 36 zusätzliche Füllstoffe, wie beispielsweise einen keramischen Werkstoff, auf.

Die Leiter 30 sind aus elektrisch leitfähigen Festkörperpartikeln hergestellt, welche mittels eines ersten thermischen Spritzverfahrens, insbesondere mittels Kaltgasspritzen, aufgesprüht sind. Die elektrisch leitfähigen Festkörperpartikel enthalten beispielsweise Kupfer, wobei mittels des ersten thermischen Spritzverfahrens eine elektrische Leitfähigkeit von mindestens 50 MS/m erzielt wird.

Die Zwischenschicht 36 ist ebenfalls aus elektrisch leitfähigen Festkörperpartikeln hergestellt, welche mittels eines zweiten thermischen Spritzverfahrens, insbesondere mittels Kaltgasspritzen, auf den isolierenden Grundkörper 26, 28 aufgesprüht sind, wobei sich das zweite thermische Spritzverfahren vom ersten thermischen Spritzverfahren unterscheidet. Insbesondere unterscheidet sich das zweite thermische Spritzverfahren vom ersten thermischen Spritzverfahren hinsichtlich einer Art der verwendeten Partikel, einer Geschwindigkeit der Partikel und/oder einer Größe der Partikel. Alternativ wird die Zwischenschicht 36 durch ein anderes Verfahren, beispielsweise durch Gießen oder durch ein galvanisches Verfahren, hergestellt. Die weitere Ausgestaltung der Wickelkopfanordnung 24 in FIG 3 entspricht der in FIG 2.

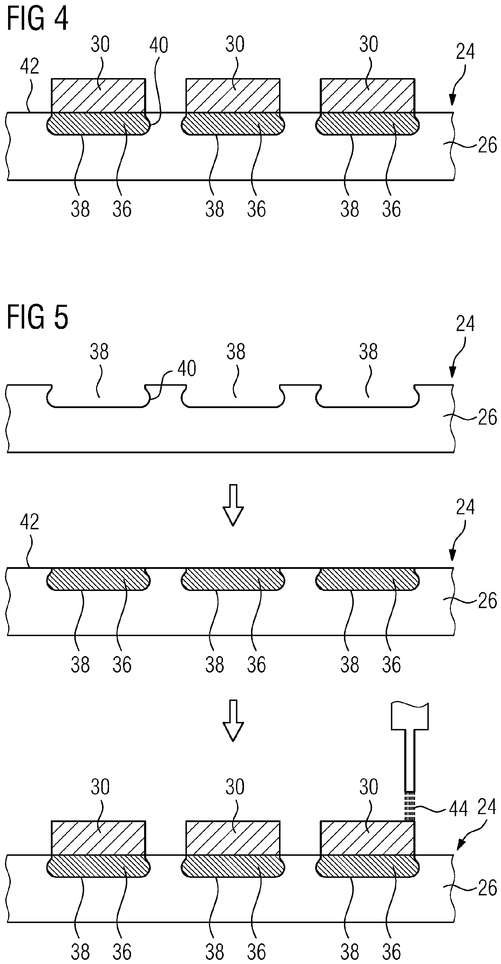

FIG 4 zeigt einen Querschnitt von Leitern 30 einer Wickelkopfanordnung 24, wobei die Leiter 30 über je eine Zwischenschicht 36 mit einem isolierenden Grundkörper 26 verbunden sind. Die Zwischenschicht 36 ist jeweils in Nuten 38 des isolierenden Grundkörpers 26 angeordnet. Die Nuten 38 weisen eine Profilierung 40 auf, über welche eine formschlüssige Verbindung mit dem isolierenden Grundkörper 26 hergestellt wird. Insbesondere ist die Nut 38 nach außen hin sich verjüngend profiliert, um eine formschlüssige Verbindung der jeweiligen Zwischenschicht 36 mit dem isolierenden Grundkörper 26 zu gewährleisten. Beispielsweise ist die Nut 38 als Hammerkopfnut oder als Schwalbenschwanznut ausgeführt. Die weitere Ausgestaltung der Wickelkopfanordnung 24 in FIG 4 entspricht der in FIG 3.

FIG 5 zeigt eine schematische Darstellung eines Verfahrens zur Herstellung einer Wickelkopfanordnung 24, wobei zunächst ein isolierender Grundkörper 26 aus einem dielektrischen Material mit Nuten 38 bereitgestellt wird. Die Nuten weisen eine Profilierung 40 auf, durch welche ein Überstand des dielektrischen Materials des isolierenden Grundkörpers 26, beispielsweise im Bereich einer Öffnung der Nut 38, entsteht.

In einem weiteren Schritt wird eine Zwischenschicht 36 in den Nuten angeordnet, welche im Wesentlichen bündig mit einer Oberfläche 42 des isolierenden Grundkörpers 26 abschließt. Die Zwischenschicht 36 wird mittels eines zweiten thermischen Spritzverfahrens, insbesondere mittels Kaltgasspritzen, auf den isolierenden Grundkörper 26 aufgesprüht. Um die Nut 38 trotz der Profilierung 40 homogen auszufüllen, werden die Partikel des zweiten thermischen Spritzverfahrens aus unterschiedlichen Richtungen in die jeweilige Nut 38 gesprüht. Alternativ wird die Zwischenschicht 36 auf andere Weise, beispielsweise durch Gießen oder durch ein galvanisches Verfahren, in die Nuten 38 eingebracht.

In einem weiteren Schritt werden Leiter 30 mittels eines ersten thermischen Spritzverfahrens, insbesondere mittels Kaltgasspritzen, auf die Zwischenschicht 36 aufgesprüht. Insbesondere bei der Verwendung von Partikeln aus Kupfer, welche mittels Kaltgasspritzen auf die Zwischenschicht 36 aufgesprüht werden, ermöglicht die Zwischenschicht 36 eine bessere Haftung und eine größere Partikeldichte, da die Partikel mit einer größeren Geschwindigkeit auf die Zwischenschicht 36 als auf den isolierenden Grundkörper 26 gesprüht werden können. Neben einer verbesserten Stabilität ergibt sich bei der Verwendung einer Zwischenschicht 36 für die Leiter 30 eine größere elektrische Leitfähigkeit. In einem weiteren nicht in FIG 5 dargestellten Schritt wird eine elektrische Isolation zumindest auf die Leiter 30 aufgebracht. Die weitere Ausgestaltung der Wickelkopfanordnung 24 in FIG 5 entspricht der in FIG 4.

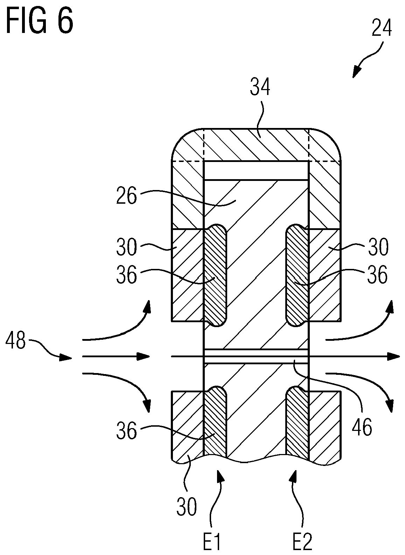

FIG 6 zeigt einen vergrößerten Querschnitt einer zweiten Ausführungsform einer Wickelkopfanordnung 24. Die Leiter 30 sind beidseitig über je eine Zwischenschicht 36 mit einem isolierenden Grundkörper 26 verbunden, wobei jeweils eine Seite des isolierenden Grundkörpers 26 mit den jeweiligen Zwischenschichten 36 und damit verbundenen Leitern 30 eine Ebene E1, E2 bildet. Die Leiter 30 der Ebenen E1, E2 sind über elektrisch leitfähige Verbindungselemente 34, welche beispielsweise aus Kupfer hergestellt sind, miteinander verbunden. Darüber hinaus weist die Wickelkopfanordnung 24 mindestens einen Kühlkanal 46 auf, um die stromdurchflossenen Leiter 30 der Wickelkopfanordnung 24 durch eine durch den mindestens einen Kühlkanal 46 fließende Kühlfluidströmung beidseitig zu kühlen. Beispielsweise ist der mindestens eine Kühlkanal 46 in Axialrichtung angeordnet. Zusätzlich oder alternativ ist der mindestens eine Kühlkanal 46 zumindest teilweise in Radialrichtung angeordnet. Als Kühlfluid sind Luft, Prozessgas, Wasser, Öl oder andere flüssige und/oder gasförmige Kühlmedien verwendbar. Die weitere Ausgestaltung der Wickelkopfanordnung 24 in FIG 6 entspricht der in FIG 5.

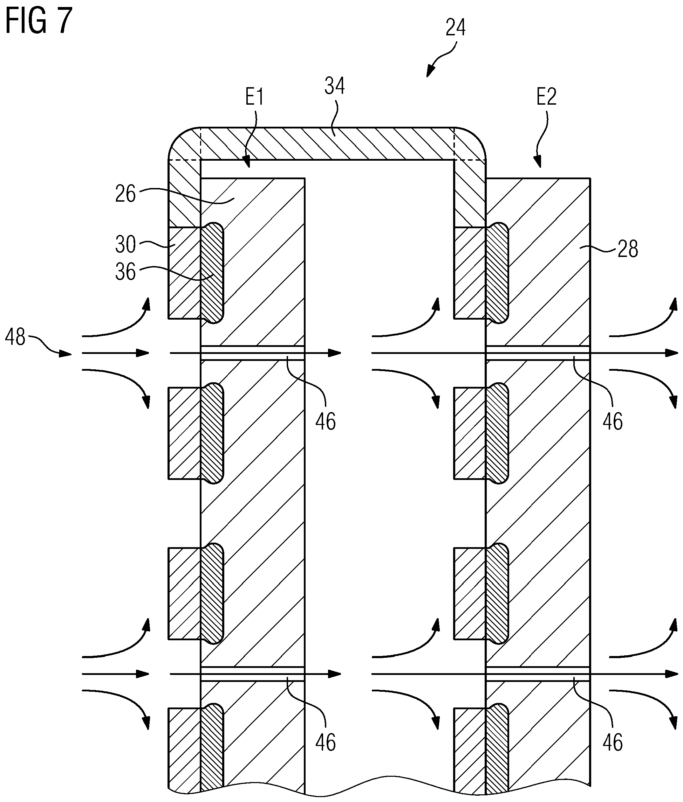

FIG 7 zeigt einen vergrößerten Querschnitt einer dritten Ausführungsform einer Wickelkopfanordnung 24, welche zwei in Axialrichtung hintereinander angeordnete Ebenen E1, E2 mit jeweils einem isolierende Grundkörper 26, 28 umfasst. Die isolierenden Grundkörper 26, 28 weisen Kühlkanäle 46 auf, wobei zumindest ein Kühlkanal 46 des ersten isolierenden Grundkörpers 26 fluidtechnisch mit zumindest einem Kühlkanal 46 des zweiten isolierenden Grundkörpers 28 verbunden ist. Die weitere Ausgestaltung der Wickelkopfanordnung 24 in FIG 7 entspricht der in FIG 6.

Zusammenfassend betrifft die Erfindung ein Verfahren zur Herstellung einer Wickelkopfanordnung 24 für eine elektrische rotierende Maschine 2. Um eine Wickelkopfanordnung 24 anzugeben, die, im Vergleich zum Stand der Technik, einfacher und kostengünstiger herzustellen ist, wird vorgeschlagen, dass die Wickelkopfanordnung 24 mindestens einen isolierenden Grundkörper 26, 28 aufweist, welcher zumindest teilweise aus einem dielektrischen Werkstoff hergestellt ist, wobei eine Mehrzahl von Leitern 30 aus einem metallischen Werkstoff über zumindest je eine Zwischenschicht 36 mit dem isolierenden Grundkörper 26, 28 verbunden werden, wobei die Zwischenschicht 36 aus einem Werkstoff, welcher sich vom dielektrischen Werkstoff und vom metallischen Werkstoff unterscheidet, hergestellt wird, wobei die Leiter 30 mittels eines ersten thermischen Spritzverfahrens auf die Zwischenschicht 36 aufgesprüht werden.

## Patentansprüche

1. Verfahren zur Herstellung einer Wickelkopfanordnung (24) für eine elektrische rotierende Maschine (2) mit mindestens einem isolierenden Grundkörper (26, 28), welcher zumindest teilweise aus einem dielektrischen Werkstoff hergestellt ist,
wobei eine Mehrzahl von Leitern (30) aus einem metallischen Werkstoff über zumindest je eine Zwischenschicht (36) mit dem isolierenden Grundkörper (26, 28) verbunden werden,
wobei die Zwischenschicht (36) aus einem Werkstoff, welcher sich vom dielektrischen Werkstoff und vom metallischen Werkstoff unterscheidet, hergestellt wird,
wobei die Leiter (30) mittels eines ersten thermischen Spritzverfahrens auf die Zwischenschicht (36) aufgesprüht werden.

2. Verfahren nach Anspruch 1,
wobei die Leiter (30) mittels Kaltgasspritzen, auf die Zwischenschicht (36) aufgesprüht werden.

3. Verfahren nach einem der Ansprüche 1 oder 2,
wobei die Zwischenschicht (36) zumindest über eine formschlüssige Verbindung mit dem isolierenden Grundkörper (26, 28) verbunden wird.

4. Verfahren nach einem der vorherigen Ansprüche,
wobei die Zwischenschicht (36) mittels eines zweiten thermischen Spritzverfahrens, insbesondere mittels Kaltgasspritzen, auf den isolierenden Grundkörper (26, 28) aufgesprüht wird,
wobei sich das zweite thermische Spritzverfahren vom ersten thermischen Spritzverfahren unterscheidet.

5. Verfahren nach Anspruch 4,
wobei sich das zweite thermische Spritzverfahren hinsichtlich einer Geschwindigkeit und/oder einer Größe der Partikel vom ersten thermischen Spritzverfahren unterscheidet.

6. Verfahren nach einem der vorherigen Ansprüche,
wobei die Zwischenschicht (36) zumindest teilweise in Nuten (38) des isolierenden Grundkörpers (26, 28) angeordnet wird.

7. Verfahren nach Anspruch 3 und Anspruch 6,
wobei die Nuten (38) des isolierenden Grundkörpers (26) eine Profilierung (40) aufweisen, über welche die formschlüssige Verbindung hergestellt wird.

8. Verfahren nach einem der vorherigen Ansprüche,
wobei in einem weiteren Schritt eine elektrische Isolation aufgebracht wird.

9. Verfahren nach einem der vorherigen Ansprüche,
wobei Kühlkanäle (46) im isolierenden Grundkörper (26) angeordnet werden.

10. Verfahren nach einem der vorherigen Ansprüche,
wobei die Leiter (30) in zumindest zwei, insbesondere in Axialrichtung hintereinander angeordneten, Ebenen (E1, E2) angeordnet werden.

11. Verfahren nach Anspruch 10,
wobei die Leiter (30) der zumindest zwei Ebenen (E1, E2) über Verbindungselemente (34) miteinander verbunden werden.

12. Verfahren nach einem der vorherigen Ansprüche,
wobei ein dielektrischer Werkstoff mit einer Durchschlagsfestigkeit von mindestens 10 kV/mm verwendet wird.

13. Verfahren nach einem der vorherigen Ansprüche,
wobei ein metallischer Werkstoff verwendet wird, welcher eine höhere elektrische Leitfähigkeit und/oder eine höhere Festigkeit als der Werkstoff der Zwischenschicht (36) aufweist.

14. Wickelkopfanordnung (4) für eine elektrische rotierende Maschine (2), welche nach einem Verfahren gemäß einem der vorhergehenden Ansprüche hergestellt ist.

15. Stator (8) für eine elektrische rotierende Maschine (2), welcher ein magnetfeldführendes Statorelement (18) und mindestens eine Wickelkopfanordnung (24) nach Anspruch 14 aufweist.

16. Stator (8) nach Anspruch 15,
welcher Spulenstäbe (22) aufweist, welche zumindest teilweise im magnetfeldführenden Statorelement (18) verlaufend angeordnet und mit den Leitern (30) der Wickelkopfanordnung (24) verbunden sind.

17. Stator (8) nach Anspruch 16,
wobei die Leiter (30) im Wesentlichen senkrecht zu den Spulenstäben (22) angeordnet sind.

18. Elektrische rotierende Maschine (2) mit mindestens einem Stator (8) nach einem der Ansprüche 15 bis 17.
